# EUROPÄISCHE PATENTANMELDUNG

(11) **EP 4 293 315 A1**
(43) Veröffentlichungstag der Anmeldung: **20.12.2023**
(21) Anmeldenummer: 22178679.1
(22) Anmeldetag: 13.06.2022
(51) Int. Cl.: G01B 11/02, B29C 48/00, B65H 5/08, G01B 11/06

(54) **VERSORGUNGSVORRICHTUNG ZUM AUTOMATISCHEN MATERIALWECHSEL FÜR EXTRUDER**

(71) Anmelder: Continental Reifen Deutschland GmbH, 30165 Hannover (DE)
(72) Erfinder: Winkler, Jens, 30165 Hannover (DE); Eckstein, Alexander, 30165 Hannover (DE); Komischke, Ralf, 30165 Hannover (DE); Rudolph, Marco, 30165 Hannover (DE); Chatziplaton, Charalampos, 30165 Hannover (DE)
(74) Vertreter: Continental Corporation

(57) **Zusammenfassung**

Die Erfindung betrifft Versorgungsvorrichtung (10) zur Überführung eines bahnförmigen Materials (12) von einem Materialstapel (14) auf eine Fördervorrichtung (16), umfassend: a) eine Höhenbestimmungseinheit (18), wobei die Höhenbestimmungseinheit (18) dazu eingerichtet ist, die Höhe des Materialstapels (14) zu bestimmen, b) eine Endabschnittsidentifikationseinheit (20a, 20b), wobei die Endabschnittsidentifikationseinheit (20a-b) dazu eingerichtet ist, im Materialstapel (14) die Position eines Endabschnitts (22a, 22b) des bahnförmigen Materials (12) zu identifizieren, c) eine Aufnahmeeinheit (24), wobei die Aufnahmeeinheit (24) dazu eingerichtet ist, dass bei Kontakt mit dem bahnförmigen Material (12) eine reversibel und zerstörungsfrei lösbare Verbindung mit dem bahnförmigen Material (12) hergestellt werden kann, d) eine Bewegungseinheit (26), wobei die Bewegungseinheit (26) dazu eingerichtet ist, die Aufnahmeeinheit (24) zum Herstellen eines Kontaktes mit dem bahnförmigen Material (12) entlang einer Kontaktierungsrichtung zu bewegen und dazu eingerichtet ist, die Aufnahmeeinheit (24) in zumindest eine Richtung quer zur Kontaktierungsrichtung zu bewegen, und e) eine Steuerungseinheit zur Steuerung der Versorgungsvorrichtung (10).

## Beschreibung

Die Erfindung betrifft eine Versorgungsvorrichtung zur Überführung eines bahnförmigen Materials sowie ein Versorgungssystem mit einer entsprechenden Versorgungsvorrichtung und ein darauf aufbauendes Extrudersystem. Die Erfindung betrifft zudem ein Verfahren zur Überführung eines bahnförmigen Materials mit einer entsprechenden Versorgungsvorrichtung oder einem entsprechenden Versorgungssystem sowie ein daran anknüpfendes Verfahren zum Versorgen eines Extruders mit einem bahnförmigen Material. Offenbart wird zudem die Verwendung einer entsprechenden Versorgungsvorrichtung oder eines entsprechenden Versorgungssystems beim Betrieb eines Extrusionssystems.

Wie in den meisten Industriezweigen besteht auch in der Kautschuk verarbeitenden Industrie ein stetes Interesse daran, die bestehenden Verfahren und Prozesse effizienter zu gestalten, den Bedarf an Arbeitskräften zu reduzieren, die Gefahren für Mensch und Umwelt zu minimieren und den Automatisierungsgrad zu steigern. Ein Arbeitsschritt der Kautschuk verarbeitenden Industrie, welcher heutzutage in großen Teilen noch händisch erledigt werden muss, ist die Versorgung der eingesetzten Extruder bzw. die Beschickung der eingesetzten Förderbänder mit den zu verarbeitenden Kautschukmaterialien. Diese Kautschukmaterialien werden vor dem Zuführen in den Extruder üblicherweise als Endlosbahnen auf typischen Paletten gelagert, wobei diese Endlosbahnen regelmäßig in einem zickzackförmigen Muster gestapelt sind, sodass die oberen Teile der Bahn auf den unteren Teilen der Bahn aufliegen. Hierbei ist es möglich, dass das Kautschukmaterial in einer Breite bereitgestellt wird, die im Wesentlichen der gesamten Breite der Palette entspricht. Zudem ist es möglich, dass die Endlosbahn mit einer verringerten Breite bereitgestellt werden kann, sodass mehrere Endlosbahnen nebeneinander auf einer Palette gelagert werden können.

Von der zur Lagerung verwendeten Palette muss das Kautschukmaterial auf eine Fördervorrichtung, beispielsweise ein Zuführband, aufgelegt werden, welches das Kautschukmaterial zum Trichter des Extruders transportiert. Sobald ein Großteil des auf der Palette gelagerten Kautschukmaterials über das Zuführband zum Extruder geführt und die Palette gelehrt wurde, muss zur Beibehaltung eines möglichst ununterbrochenen Extruderbetriebes und zur Gewährleistung einer möglichst kontinuierlichen Materialzufuhr ein Materialwechsel erfolgen, bei dem eine neue Bahn an Kautschukmaterial von einer neuen Palette bereitgestellt und möglichst ohne Unterbrechung an das nunmehr fast vollständig von der ersten Palette entfernte Kautschukmaterial angelegt wird.

Dieser Materialwechsel erfolgt im Stand der Technik zumeist manuell. Hierfür schneidet der Maschinenbediener das auf dem Zuführband befindliche erste Kautschukmaterial gegebenenfalls ab, beispielsweise wenn bei einer nur teilweise geleerten Palette der Wechsel auf ein anderes Kautschukmaterial erfolgen soll. Die alte Palette muss dann mit einem geeigneten Werkzeug, beispielsweise einem Gabelstapler, entfernt und durch eine neue Palette mit dem nachzuliefernden Kautschukmaterial ersetzt werden. Neben dem Verschieben der in vielen Fällen schweren Paletten müssen die im Prozess eingesetzten Arbeitskräfte hierbei regelmäßig auch die Höhe der Fördereinrichtung adaptieren, das Ende des bahnförmigen Materials in dem auf der Palette gelagerten Materialstapel identifizieren und dieses anheben und zur Fördereinrichtung bewegen, wobei das in vielen Fällen klebrige Material diesen Schritt zusätzlich erschwert. Die im Prozess eingesetzten Arbeitskräfte müssen schließlich das neue Material hinsichtlich der Qualität und Oberflächenbeschaffenheit validieren und das neue Material am alten Material befestigen, beziehungsweise mit diesem auf Stoß legen, um eine möglichst kontinuierliche Zufuhr zu ermöglichen.

Dieser Prozess ist für die im Verfahren eingesetzten Arbeitskräfte nicht nur physisch anstrengend, sondern kostet auch regelmäßig Zeit, in der das Extrudersystem nicht arbeiten kann. Angesichts der Tatsache, dass typische Extrudersysteme regelmäßig über mehr als eine Fördervorrichtung verfügen, über die unterschiedliche Kautschukmaterialien zum Extruder geführt werden und die sämtlich von den eingesetzten Arbeitskräften beim Materialwechsel betreut werden müssen, multiplizieren sich nicht nur die Einbußen bei der Produktivität des Extrudersystems. Zusätzlich wird für die im Prozess eingesetzten Arbeitskräfte die gleichzeitige Überwachung sämtlicher Fördereinrichtungen und die Gewährleistung einer kontinuierlichen Materialzuführung zudem als psychisch belastend und als Ablenkung von der eigentlichen Tätigkeit gesehen, die in der Bedienung des Extrudersystems liegt. Die resultierende Belastung der eingesetzten Arbeitskräfte kann im schlechtesten Fall zu einer erhöhten Fehleranfälligkeit und mit Blick auf die Arbeitssicherheit zu erhöhten Risiken führen.

Es war die primäre Aufgabe der vorliegenden Erfindung, die vorstehend beschriebenen Nachteile des Standes der Technik auszuräumen oder zumindest zu verringern.

Insbesondere war es eine Aufgabe der vorliegenden Erfindung, eine Versorgungsvorrichtung zur Überführung eines bahnförmigen Materials von einem Materialstapel auf eine Fördervorrichtung anzugeben, durch welche die körperliche und psychische Belastung der im Prozess eingesetzten Arbeitskräfte reduziert und der Materialaustausch bei der kontinuierlichen Förderung von bahnförmigen Materialien erleichtert werden kann.

Es war eine weitere Aufgabe der vorliegenden Erfindung, dass die anzugebende Versorgungsvorrichtung einen höheren Grad der Automatisierung ermöglichen sollte.

In diesem Zusammenhang war es eine Aufgabe der vorliegenden Erfindung, dass die anzugebende Versorgungsvorrichtung es ermöglichen sollte, den Materialwechsel eines bahnförmigen Materials bei der kontinuierlichen Zuführung solcher Materialien zeit- und kosteneffizienter ausgestalten zu können, wobei wünschenswerterweise eine hohe Arbeitssicherheit gewährleistbar sein sollte.

Es war eine weitere Aufgabe der vorliegenden Erfindung, dass durch den Einsatz der anzugebenden Versorgungsvorrichtung die Anfälligkeit für Produktionsfehler, welche aus einer unzureichenden Ausführung des Materialwechsels durch die im Verfahren eingesetzten Arbeitskräfte resultiert, zu minimieren und die allgemeine Prozesssicherheit zu steigern.

Es war eine ergänzende Aufgabe der vorliegenden Erfindung, dass die anzugebende Versorgungsvorrichtung die im Verfahren eingesetzten Arbeitskräfte idealerweise auch bei der Bewertung der Materialqualität unterstützen sollte und das Risiko der Zufuhr von unzureichenden Materialien in die nachgelagerten Verarbeitungsvorrichtungen verringern sollte.

Es war eine weitere Aufgabe der vorliegenden Erfindung, dass die anzugebende Versorgungsvorrichtung möglichst platzsparend ausführbar sein sollte und über eine hohe Energieeffizienz verfügen sollte.

Zudem war es eine Aufgabe der vorliegenden Erfindung, ein vorteilhaftes Versorgungssystem zur Versorgung eines Extruders sowie ein entsprechendes Extrudersystem anzugeben, die eine entsprechende Versorgungsvorrichtung umfassen. Vor diesem Hintergrund war es ebenfalls eine Aufgabe der vorliegenden Erfindung, ein entsprechendes Verfahren zur Überführung eines bahnförmigen Materials von einem Materialstapel auf eine Fördervorrichtung sowie ein dazu korrespondierendes Verfahren zum Versorgen eines Extruders mit bahnförmigem Material anzugeben.

Es war eine sekundäre Aufgabe der vorliegenden Erfindung, zudem eine vorteilhafte Verwendung einer entsprechenden Versorgungsvorrichtung beim Betrieb eines Extrusionssystems anzugeben.

Die Erfinder der vorliegenden Erfindung haben nunmehr erkannt, dass sich die vorstehend beschriebenen Aufgaben überraschenderweise lösen lassen, wenn eine Versorgungsvorrichtung zur Überführung eines bahnförmigen Materials von einem Materialstapel auf eine Fördervorrichtung bereitgestellt wird, die die Position des aufzunehmenden Endabschnittes des bahnförmigen Materials auf der Palette unter Einsatz einer Höhenbestimmungseinheit und einer Endabschnittsidentifikationseinheit ermitteln kann, um diesen Endabschnitt mittels einer Aufnahmeeinheit vom Materialstapel abzuheben und den derart angehobenen Endabschnitt in Richtung der Fördereinheit zu bewegen, was durch eine Steuerungseinheit gesteuert werden kann, wie es in den Ansprüchen definiert ist. Auf diese Weise wird eine vorteilhafte Versorgungsvorrichtung erhalten, mit der die beim Materialwechsel notwendigen Arbeitsschritte umfassend automatisiert werden können, wodurch eine signifikante Entlastung der im Prozess eingesetzten Arbeitskräfte eine Steigerung der Zeit- und Kosteneffizienz der mit Material versorgten Verfahren und eine allgemeine Steigerung der Arbeits- und Prozesssicherheit erreicht werden können.

Die vorstehend genannten Aufgaben werden entsprechend durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Versorgungssysteme, Verfahren, Extrudersysteme und Verwendungen ergeben sich aus den Merkmalen bevorzugter Versorgungsvorrichtungen.

Die Erfindung betrifft eine Versorgungsvorrichtung zur Überführung eines bahnförmigen Materials von einem Materialstapel auf eine Fördervorrichtung, umfassend:
a) eine Höhenbestimmungseinheit, wobei die Höhenbestimmungseinheit dazu eingerichtet ist, die Höhe des Materialstapels zu bestimmen,
b) eine Endabschnittsidentifikationseinheit, wobei die Endabschnittsidentifikationseinheit dazu eingerichtet ist, im Materialstapel die Position eines Endabschnitts des bahnförmigen Materials zu identifizieren,
c) eine Aufnahmeeinheit, wobei die Aufnahmeeinheit dazu eingerichtet ist, dass bei Kontakt mit dem bahnförmigen Material eine reversibel und zerstörungsfrei lösbare Verbindung mit dem bahnförmigen Material hergestellt werden kann,
d) eine Bewegungseinheit, wobei die Bewegungseinheit dazu eingerichtet ist, die Aufnahmeeinheit zum Herstellen eines Kontaktes mit dem bahnförmigen Material entlang einer Kontaktierungsrichtung zu bewegen und dazu eingerichtet ist, die Aufnahmeeinheit in zumindest eine Richtung quer zur Kontaktierungsrichtung zu bewegen, und
e) eine Steuerungseinheit zur Steuerung der Versorgungsvorrichtung.

Die erfindungsgemäße Versorgungsvorrichtung ist zur Überführung eines bahnförmigen Materials, beispielsweise eines bahnförmigen Kautschukstranges von einem Materialstapel auf eine Fördervorrichtung geeignet. Der Fachmann versteht, dass weder das bahnförmige Material noch der Materialstapel oder die Fördervorrichtung Teil der erfindungsgemäßen Versorgungsvorrichtung sind, sondern lediglich Bezugspunkte darstellen, über die die Eignung der einzelnen Komponenten der erfindungsgemäßen Versorgungsvorrichtung definiert werden kann.

Das Grundprinzip der erfindungsgemäßen Versorgungsvorrichtung basiert darauf, dass mittels einer Höhenbestimmungseinheit und einer Endabschnittsidentifikationseinheit die Position eines Endabschnitts des bahnförmigen Materials, welcher aufgenommen werden soll, bestimmt werden kann. Zur Aufnahme und Bewegung des identifizierten Endabschnittes gibt es eine Aufnahmeeinheit, die den losen Endabschnitt aufnehmen und vom Materialstapel abheben kann, wobei diese Aufnahmeeinheit an einer Bewegungseinheit angeordnet ist, die dazu dient, die Aufnahmeeinheit auf das bahnförmige Material herabzusenken, dieses zusammen mit der Aufnahmeeinheit anzuheben und anschließend in Richtung einer nachgelagerten Fördervorrichtung zu bewegen.

In der Praxis gestaltet sich der Einsatz einer erfindungsgemäßen Versorgungsvorrichtung so, dass ein bahnförmiges Material in der Form eines Materialstapels bereitgestellt wird, auf dem es üblicherweise in einer Zickzackanordnung gelagert wird, wobei das Bereitstellen in der Praxis zumeist über eine Palette erfolgt, welche mit einem regulären Flurförderfahrzeug in die Versorgungsvorrichtung eingebracht werden kann. Wenn beispielsweise ein bahnförmiges Material mittels einer Fördervorrichtung komplett von der Palette entfernt wurde und der Bedarf nach einem Materialwechsel besteht, kann die leere Palette entfernt und durch eine neue Palette ersetzt werden.

Der Fachmann versteht, dass das bahnförmige Material zweckmäßigerweise so in der Form eines Materialstapels bereitgestellt wird, dass der Materialstapel in der erfindungsgemäßen Versorgungsvorrichtung so orientiert ist, dass das bahnförmige Material von der erfindungsgemäßen Versorgungsvorrichtung effizient angehoben und in zumindest eine Richtung quer zur Kontaktierungsrichtung bewegt werden kann, was insbesondere dadurch erreicht wird, dass die Aufnahmeeinheit an einer der Stirnseiten des Materialstapels angeordnet wird, die quer zur Längsrichtung das bahnförmigen Materials liegt. Eine besonders vorteilhafte Verfahrensführung ergibt sich dann, wenn das bahnförmiges Material in der Form eines Materialstapels so bereitgestellt wird, dass das lose Ende des Endabschnitts in Richtung der erfindungsgemäßen Versorgungsvorrichtung weist, da dies eine besonders effiziente Aufnahme des Endabschnitts und ein besonders präzises Ablegen des Endabschnitts auf der Fördervorrichtung ermöglicht.

Die Höhenbestimmungseinheit und die Endabschnittsidentifikationseinheit der Versorgungsvorrichtung identifizieren in diesem neu eingebrachten Materialstapel den losen Endabschnitt des bahnförmigen Materials, welcher auf die Fördervorrichtung übertragen werden soll bzw. die Höhe des Materialstapels. Nach Identifikation der Position dieses Endabschnitts veranlasst die Steuerungseinheit das Kontaktieren des bahnförmigen Materials im Bereich des Endabschnitts mit der Aufnahmeeinheit in einer Weise, dass eine vorübergehende Verbindung zwischen der Aufnahmeeinheit und dem bahnförmigen Material hergestellt wird. Die zuvor zum Kontaktieren verwendete Bewegungseinheit wird nach Herstellung des Kontaktes dazu verwendet, den losen Endabschnitt anzuheben und diesen relativ zum Materialstapel in Richtung der Fördervorrichtung zu bewegen. Das bahnförmige Material kann mit dem Endabschnitt auf der Fördervorrichtung platziert werden, woraufhin die Verbindung mit der Aufnahmeeinheit gelöst wird, sodass die Fördereinheit und die ihr nachgeschalteten Vorrichtungen, beispielsweise Extruder, in gewünschter Weise weiter betrieben werden können.

Typisch ist in Bezug auf die in der Praxis übliche Ausrichtung der Arbeitsprozesse eine erfindungsgemäße Versorgungsvorrichtung, wobei die Versorgungsvorrichtung so ausgelegt ist, dass die Bewegungseinheit im Betrieb dazu eingerichtet ist, die Aufnahmeeinheit entlang einer im Wesentlichen vertikal verlaufenden Kontaktierungsrichtung und quer zu dieser Kontaktierungsrichtung im Wesentlichen horizontal, bevorzugt in der horizontalen Ebene, zu bewegen. Beispielhaft ist dabei eine erfindungsgemäße Versorgungsvorrichtung, wobei die Bewegungseinheit dazu eingerichtet ist, die Aufnahmeeinheit entlang der Kontaktierungsrichtung und in einer quer zur Kontaktierungsrichtung stehenden Ebene zu bewegen.

Im Lichte der vorstehenden Ausführungen zur Steuerungseinheit handelt es sich in anderen Worten um eine erfindungsgemäße Versorgungsvorrichtung, wobei die Steuerungseinheit dazu eingerichtet ist, die Aufnahmeeinheit mittels der Bewegungseinheit in Abhängigkeit von der Höhe des Materialstapels und/oder der Position eines Endabschnitts des bahnförmigen Materials im Materialstapel zu steuern. Zusätzlich oder alternativ ist eine erfindungsgemäße Versorgungsvorrichtung vorteilhaft, wobei die Steuerungseinheit dazu eingerichtet ist, die Verbindung der Aufnahmeeinheit mit dem bahnförmigen Material und die Auflösung dieser Verbindung in Abhängigkeit von der Position der Aufnahmeeinheit in der Bewegungseinheit, insbesondere unter Berücksichtigung der Höhe des Materialstapels und/oder der Position eines Endabschnitts, zu bedingen. Für die meisten Fälle relevant ist dabei eine erfindungsgemäße Versorgungsvorrichtung, wobei die Steuerungseinheit eine elektronische Datenverarbeitungseinheit umfasst.

Die erfindungsgemäße Versorgungsvorrichtung eignet sich in besonderer Weise für den Einsatz zur Überführung von bahnförmigen Kautschukmaterialien und damit insbesondere für den Einsatz bei der Versorgung von Extrudern.

Der Fachmann versteht, dass bei der Verwendung einer erfindungsgemäßen Versorgungsvorrichtung ein bahnförmiges Material in der Form eines Materialstapels in den Einflussbereich der erfindungsgemäßen Versorgungsvorrichtung gebracht werden muss, damit diese den Endabschnitt auf dem Materialstapel erkennen und diesen mit der Aufnahmeeinheit aufnehmen kann. In einfachen Ausführungen kann dies beispielsweise eine freie Fläche unterhalb eines für die Bewegung der Aufnahmeeinheit vorgesehenen Linearachsensystems oder ein Stück Hallenboden im Zugriffsbereich eines Industrieroboters sein. Eine besonders kontrollierte Verfahrensführung und eine präzise Steuerung bei verringerter Fehleranfälligkeit ergibt sich jedoch dann, wenn in der Versorgungsvorrichtung ein spezifischer, beispielsweise durch konstruktive Maßnahmen begrenzter Aufnahmebereich vorgesehen wird, dessen Dimensionierung auf die eingebrachten Lagereinheiten beziehungsweise Materialstapel abgestimmt werden kann, um dadurch die Parameterbreite der möglichen Steuerungsparameter und die Komplexität der Abläufe zu minimieren. Bevorzugt ist insoweit eine erfindungsgemäße Versorgungsvorrichtung, wobei die Versorgungsvorrichtung einen Aufnahmebereich zur Aufnahme einer Lagereinheit, bevorzugt einer Palette, umfasst, wobei der Materialstapel auf der Lagereinheit angeordnet ist.

Der Fachmann versteht, dass die vorliegende Erfindung vor allem auf dem Zusammenwirken von vier funktionellen Einheiten basiert, welches durch eine Steuerungseinheit koordiniert wird, wobei die jeweiligen Einheiten vor allem über ihre Funktion und Eignung definiert sind. Der Fachmann versteht insoweit auch, dass es jeweils verschiedene technische Ausgestaltungen gibt, die die notwendige Eignung bzw. Einrichtung für den Zweck gewährleisten können. Insoweit ist es den Erfindern jedoch gelungen, für die verschiedenen Komponenten besonders geeignete Ausführungsformen zu identifizieren, mit denen sich nach Einschätzung der Erfinder besonders leistungsfähige und zuverlässige Versorgungsvorrichtungen erhalten lassen, die eine zeit- und kosteneffiziente Überführung von bahnförmigen Materialien ermöglichen.

Bezüglich der Aufnahmeeinheit ist es beispielsweise denkbar, dass der identifizierte Endabschnitt über mechanische Greifer aufgenommen wird. Eine entsprechende Ausführungsform ist wegen der potentiellen mechanischen Belastung des zumeist leicht verformbaren Materials und die dadurch verursachten Unregelmäßigkeiten in der Materialzufuhr, welche aus Defekten resultieren können, weniger bevorzugt. Nach Einschätzung der Erfinder ist zur Vermeidung solcher Probleme insbesondere der Einsatz von Sauggreifern besonders bevorzugt, die die reversibel und zerstörungsfrei lösbare Verbindung mit dem bahnförmigen Material über die Erzeugung eines Unterdrucks realisieren und eine besonders schonende Aufnahme und Abgabe des Materials ermöglichen. Bevorzugt ist demgemäß eine erfindungsgemäße Versorgungsvorrichtung, wobei die Aufnahmeeinheit einen oder mehrere steuerbare Sauggreifer als Aufnahmeelemente umfasst, wobei die Versorgungsvorrichtung bevorzugt eine oder mehrere mit den Sauggreifern verbundene Vakuumpumpen umfasst.

Angesichts des Umstandes, dass die Breite der zuzuführenden bahnförmigen Materialien nicht immer der gesamten Breite der Palette entspricht, sondern in Teilen auch bewusst schmalere Materialstränge überführt werden müssen, ist es nach Einschätzung der Erfinder bevorzugt, mehrere Aufnahmeeinheiten vorzusehen, welche voneinander beabstandet sind und die idealerweise separat voneinander ansteuerbar beziehungsweise in ihrem Abstand zueinander veränderbar sind, um sich in Abhängigkeit von dem aufzunehmenden bahnförmigen Material an die Erfordernisse des Verfahrens anpassen zu können. Bevorzugt ist daher eine erfindungsgemäße Versorgungsvorrichtung, wobei die Aufnahmeeinheit zwei oder mehr voneinander beabstandete Aufnahmeelemente umfasst, wobei die Aufnahmeeinheit bevorzugt dazu eingerichtet ist, dass der Abstand zwischen den Aufnahmeelementen verändert werden kann, besonders bevorzugt durch die Steuerungseinheit.

Die Aufnahmeeinheit ist mittelbar oder unmittelbar an der Bewegungseinheit befestigt, sodass die Position der Aufnahmeeinheit relativ zu einem in der erfindungsgemäßen Versorgungsvorrichtung angeordneten Materialstapel verändert werden kann. Nach Einschätzung der Erfinder sind insoweit zwei Systeme besonders bevorzugt. Der Einsatz von Roboterarmen oder vergleichbaren automatisierten Manipulatoren ermöglicht eine besonders präzise und zielgenaue Führung der Aufnahmeeinheit beziehungsweise des aufgenommenen bahnförmigen Materials. Nach Einschätzung der Erfinder ist jedoch insbesondere der Einsatz von Linearachsensystemen mit zwei oder mehr linearen Achsen bevorzugt, da diese eine besonders einfache und zuverlässige Umsetzung der notwendigen Bewegungen ermöglichen und regelmäßig besonders leicht mit der Rahmenkonstruktion über den mit bahnförmigem Material belegten Paletten angeordnet werden können, so dass in vielen Fällen automatisch ein begrenzter Aufnahmebereich geschaffen wird. Bevorzugt ist deshalb eine erfindungsgemäße Versorgungsvorrichtung, wobei die Bewegungseinheit ein Linearachsensystem umfassend zumindest zwei lineare Achsen oder ein Roboterarm, bevorzugt ein Linearachsensystem, ist. Bevorzugt ist mit Blick auf eine möglichst stufenlose Bewegbarkeit eine erfindungsgemäße Versorgungsvorrichtung, wobei das Linearachsensystem zumindest drei lineare Achsen umfasst.

Die Höhenbestimmungseinheit dient dazu, die durch die Bewegungseinheit veranlasste Bewegung der Aufnahmeeinheit so zu steuern, dass diese nicht ungewollt mit dem Materialstapel kollidiert, sondern vielmehr zielgerichtet auf den identifizierten Endabschnitt zugeführt werden kann. Hierbei ist es nach Einschätzung der Erfinder denkbar, dass die Höhenbestimmungseinheit zusammen mit der Aufnahmeeinheit in der Bewegungseinheit angeordnet wird, sodass sie die Bewegungen der Aufnahmeeinheit mit vollzieht. Hierdurch ist nach Einschätzung der Erfinder eine sehr unmittelbare Rückkopplung über den bestehenden Abstand zum Materialstapel möglich, wobei vorteilhafterweise vermieden werden kann, dass die zwischen der Höhenbestimmungseinheit und dem Materialstapel angeordnete Aufnahmeeinheit die Bestimmung der Höhe behindert. Mit Blick auf eine einfache Ausführung ist es jedoch regelmäßig sinnvoll, die Höhenbestimmungseinheit mit einer fixierten Position, beispielsweise oberhalb des Materialstapels, auszuführen, da im ruhigen Zustand in vielen Fällen eine präzisere Bestimmung der Höhe möglich ist. Bevorzugt ist entsprechend eine erfindungsgemäße Versorgungsvorrichtung, wobei die Höhenbestimmungseinheit so an der Bewegungseinheit angeordnet ist, dass die Höhenbestimmungseinheit von der Bewegungseinheit zumindest quer zur Kontaktierungsrichtung bewegt werden kann, wobei die Höhenbestimmungseinheit bevorzugt so an der Bewegungseinheit angeordnet ist, dass die Höhenbestimmungseinheit beim Bewegen der Aufnahmeeinheit sämtliche Bewegungen der Aufnahmeeinheit nachvollzieht. Bevorzugt ist alternativ eine erfindungsgemäße Versorgungsvorrichtung, wobei die Höhenbestimmungseinheit so in der Versorgungsvorrichtung angeordnet ist, dass eine Bewegung der Aufnahmeeinheit durch die Bewegungseinheit keine Bewegung der Höhenbestimmungseinheit bewirkt.

Insbesondere in der Ausgestaltung, in der die Höhenbestimmungseinheit zusammen mit der Aufnahmeeinheit bewegt wird, ist der Einsatz von Entfernungsmessern vorteilhaft, da diese in einer relativ einfachen Ausgestaltung die zur Vermeidung von ungewollten Kollisionen wesentlichen Höheninformationen bestimmen können. Zusätzlich oder alternativ können neben strahlungsbasierten Systemen dabei auch mechanische Entfernungsmesser vorgesehen werden, welche als Kontaktsensoren fungieren und die Höhe des Materialstapels sozusagen ertasten. In vorteilhafter Weise können solche Kontaktsensoren auch eine Sperrung der Bewegungseinheit veranlassen, wenn diese beispielsweise beim Absenken der Aufnahmeeinheit auslösen. Bevorzugt ist insofern eine erfindungsgemäße Versorgungsvorrichtung, wobei die Höhenbestimmungseinheit einen Entfernungsmesser, bevorzugt einen laserbasierten Entfernungsmesser, umfasst, wobei die Höhenbestimmungseinheit dazu eingerichtet ist, die Höhe des Materialstapels aus der Entfernung zwischen der Höhenbestimmungseinheit und der Oberfläche des Materialstapels zu bestimmen. Bevorzugt ist ebenfalls eine erfindungsgemäße Versorgungsvorrichtung, wobei die Höhenbestimmungseinheit durch einen an der Bewegungseinheit angeordneten Kontaktsensor, bevorzugt einen Drucksensor, gebildet wird, wobei die Versorgungsvorrichtung dazu eingerichtet ist, die Höhe des Materialstapels aus der Position der Bewegungseinheit und dem Signal des Kontaktsensors zu bestimmen.

Für die überwiegende Zahl von Anwendungen ist nach Einschätzung der Erfinder jedoch besonders bevorzugt, auf Höhenbestimmungseinheiten zurückzugreifen, welche auf elektronische Bildaufnahmeeinrichtungen zurückgreifen und entsprechend beispielsweise kamerabasiert sind. Hierbei werden nach Einschätzung der Erfinder in einem besonders einfachen Verfahren zuverlässige Ergebnisse erhalten, wenn die elektronische Bildaufnahmeeinrichtung so platziert wird, dass sie die Seite des Materialstapels erfassen kann, um deren Höhe beispielsweise gegen eine interne oder externe Referenz zu bestimmen. Bevorzugt ist daher eine erfindungsgemäße Versorgungsvorrichtung, wobei die Höhenbestimmungseinheit eine elektronische Bildaufnahmeeinrichtung umfasst, wobei die Höhenbestimmungseinheit dazu eingerichtet ist, unter Berücksichtigung einer aufgenommenen Referenz und/oder Skala aus den von der elektronischen Bildaufnahmeeinrichtung aufgenommenen Bildern die Höhe des Materialstapels zu bestimmen, wobei die elektronische Bildaufnahmeeinrichtung bevorzugt so angeordnet ist, dass der zentrale Strahlengang mit der Kontaktierungsrichtung einen Winkel im Bereich von 80° bis 90°, bevorzugt im Bereich von 85° bis 90°, besonders bevorzugt im Wesentlichen 90°, einschließt und/oder wobei die elektronischen Bildaufnahmeeinrichtung so angeordnet ist, dass der zentrale Strahlengang beim Anordnen des Materialstapels in der Versorgungsvorrichtung im Wesentlichen orthogonal auf die Seitenwand des Materialstapels trifft.

Alternativ kann auf dem Fachmann bekannte Verfahren der Bildaufnahme und -verarbeitung, wie beispielsweise fotometrisches Stereo, zurückgegriffen werden, um aus unterschiedlichen Bildern verschiedener Kameras und/oder bei verschiedenen Beleuchtungssituationen, eine dreidimensionale Information aus einer Bildaufnahme zu generieren, aus der eine Höheninformation herleitbar ist. Entsprechende Systeme und die dafür notwendige Software kann der Fachmann dabei kommerziell am Markt erwerben. Bevorzugt ist folglich alternativ eine erfindungsgemäße Versorgungsvorrichtung, wobei die Höhenbestimmungseinheit eine elektronische Bildaufnahmeeinrichtung und zwei oder mehr voneinander beabstandet angeordnete Lichtquellen umfasst, wobei die Höhenbestimmungseinheit dazu eingerichtet ist, durch photometrisches Stereo aus den von der elektronischen Bildaufnahmeeinrichtung aufgenommenen Bildern die Höhe des Materialstapels zu bestimmen. Bevorzugt ist zusätzlich oder alternativ auch eine erfindungsgemäße Versorgungsvorrichtung, wobei die Höhenbestimmungseinheit zwei oder mehr voneinander beabstandet angeordnete elektronische Bildaufnahmeeinrichtungen umfasst, wobei die Höhenbestimmungseinheit dazu eingerichtet ist, durch aus der Differenz der von den elektronischen Bildaufnahmeeinrichtungen aufgenommenen Bildern die Höhe des Materialstapels zu bestimmen.

Die zweite Funktionalität der erfindungsgemäßen Versorgungsvorrichtung, welche durch die Endabschnittidentifikationseinheit erbracht wird, ist es, das lose Ende des bahnförmigen Materials, welches zumeist auf der Oberfläche des Materialstapels liegt, jedoch auch teilweise an der Seite des Materialstapels hinabhängen kann, zu identifizieren, sodass die Aufnahmeeinheit an die richtige Stelle gefahren werden kann, um das bahnförmige Material in seinem Endbereich aufzunehmen und dadurch eine zuverlässige und reproduzierbare Aufnahme des bahnförmigen Materials zu ermöglichen. Hinsichtlich der Positionierung der Endabschnittsidentifikationseinheit schlagen die Erfinder vor, dass diese analog zu der Höhenbestimmungseinheit entweder statisch oder in einer zusammen mit der Aufnahmeeinheit beweglichen Ausgestaltung ausgeführt werden kann. Bevorzugt ist daher eine erfindungsgemäße Versorgungsvorrichtung, wobei die Endabschnittsidentifikationseinheit so an der Bewegungseinheit angeordnet ist, dass die Endabschnittsidentifikationseinheit von der Bewegungseinheit zumindest quer zur Kontaktierungsrichtung bewegt werden kann, wobei die Endabschnittsidentifikationseinheit bevorzugt so an der Bewegungseinheit angeordnet ist, dass die Höhenbestimmungseinheit beim Bewegen der Aufnahmeeinheit sämtliche Bewegungen der Aufnahmeeinheit nachvollzieht. Bevorzugt ist alternativ eine erfindungsgemäße Versorgungsvorrichtung, wobei die Endabschnittsidentifikationseinheit so in der Versorgungsvorrichtung angeordnet ist, dass eine Bewegung der Aufnahmeeinheit durch die Bewegungseinheit keine Bewegung der Endabschnittsidentifikationseinheit bewirkt.

Auch wenn für die Endabschnittsidentifikationseinheiten prinzipiell mechanische Tastvorrichtungen denkbar sind, ist es nach Einschätzung der Erfinder für im Wesentlichen alle Fälle bevorzugt, wenn die Endabschnittsidentifikationseinheit eine elektronische Bildaufnahmeeinrichtung umfasst, wobei wiederum auf dem Fachmann bekannte Techniken der Bilderkennung und/oder Bildauswertung, beispielsweise das fotometrische Stereo, zurückgegriffen werden kann. Aus der enthaltenen Bildaufnahme kann beispielsweise mittels geeigneter Software die Position des Endabschnitts des bahnförmigen Materials zuverlässig identifiziert werden. In der Praxis kann die hierfür notwendige Software regelmäßig besonders leicht konzipiert werden, da in Abhängigkeit vom Einsatzzweck zumeist vergleichsweise uniforme Materialien verarbeitet werden sollen, sodass sehr grundlegende Methoden der Bilderkennung regelmäßig ausreichend sind, auch wenn komplexere Ausgestaltungen, beispielsweise unter Einsatz von künstlicher Intelligenz, welche auf die Erkennung von Endabschnitten auf Materialstapeln trainiert ist, denkbar sind. Bevorzugt ist folglich eine erfindungsgemäße Versorgungsvorrichtung, wobei die Endabschnittsidentifikationseinheit eine elektronische Bildaufnahmeeinrichtung umfasst, wobei die Funktionseinheit dazu eingerichtet ist, aus den von der elektronischen Bildaufnahmeeinrichtung aufgenommenen Bildern im Materialstapel die Position eines Endabschnitts des bahnförmigen Materials zu identifizieren, wobei die Endabschnittsidentifikationseinheit bevorzugt zwei oder mehr voneinander beabstandet angeordnete Lichtquellen umfasst und dazu eingerichtet ist, durch photometrisches Stereo aus den von der elektronischen Bildaufnahmeeinrichtung aufgenommenen Bildern im Materialstapel die Position eines Endabschnitts des bahnförmigen Materials zu identifizieren.

Im Lichte der vorstehenden Ausführungen versteht der Fachmann, dass die Funktionalitäten der Höhenbestimmung und der Endabschnittsidentifikation zumindest teilweise durch die gleichen Vorrichtungen, insbesondere elektronische Bildaufnahmeeinrichtungen geleistet werden können. Entsprechend ist es besonders bevorzugt, diesen Vorteil auszunutzen und die Höhenbestimmung und die Identifikation des Endabschnitts durch die gleiche Funktionseinheit auszuführen, beispielsweise indem in einem Rahmen eines fotometrischen Stereo eine dreidimensionale Bildinformation erhalten und die Position des Endabschnitts in alle drei Raumrichtungen aus dieser Information bestimmt wird. Bevorzugt ist also eine erfindungsgemäße Versorgungsvorrichtung, wobei die Höhenbestimmungseinheit und die Endabschnittsidentifikationseinheit durch dieselbe Funktionseinheit gebildet werden, wobei die Funktionseinheit bevorzugt eine elektronische Bildaufnahmeeinrichtung umfasst, wobei die Funktionseinheit dazu eingerichtet ist, aus den von der elektronischen Bildaufnahmeeinrichtung aufgenommenen Bildern die Höhe des Materialstapels zu bestimmen und im Materialstapel die Position eines Endabschnitts des bahnförmigen Materials zu identifizieren.

Für sämtliche der vorstehend beschriebenen Fälle bevorzugt ist es, wenn als elektronische Bildaufnahmeeinrichtung eine Kamera eingesetzt wird, da solche Kameras in vielen Ausgestaltungen kommerziell verfügbar sind und gemeinsam mit geeigneter, ebenfalls kommerziell erhältlicher Software, zuverlässig der Bestimmung der benötigten Informationen dienen können. Bevorzugt ist demgemäß eine erfindungsgemäße Versorgungsvorrichtung, wobei die elektronische Bildaufnahmeeinrichtung eine Kamera, bevorzugt eine 3D-Kamera, umfasst.

Zur Steigerung der Genauigkeit und zum Zwecke einer präziseren Verfahrensführung schlagen die Erfinder vor, dass die Funktion der Höhenbestimmungseinheit und/oder der Endabschnittsidentifikationseinheit dadurch unterstützt werden kann, dass durch den Einsatz von Projektoren gezielt Projektionsmuster auf die Oberfläche des Materialstapels projiziert werden können, wobei sich eine Verzerrung des aufgestrahlten Projektionsmusters in Abhängigkeit von der Höhe und Beschaffenheit des Materialstapels ergibt. Hierdurch ist es insbesondere bei Einsatz von elektronischen Bildaufnahmeeinrichtungen regelmäßig leichter, Informationen über die dreidimensionale Beschaffenheit des Materialstapels zu gewinnen, insbesondere beim Einsatz von kontrastarmen, bspw. gleichmäßig schwarzen Materialien, wie es häufig bei Kautschukprodukten der Fall ist, sodass in dieser Ausführungsform in vorteilhafter Weise die benötigte Rechenleistung, welche zur Auswertung der Bildinformationen benötigt wird, verringert werden kann. Bevorzugt ist deshalb eine erfindungsgemäße Versorgungsvorrichtung, wobei die Versorgungsvorrichtung zusätzlich umfasst:
f) einen oder mehrere Projektoren, bevorzugt LED- oder Laserprojektoren, die dazu eingerichtet sind, mittels elektromagnetischer Strahlung, bevorzugt sichtbarer elektromagnetischer Strahlung, eine Projektionslinie oder ein Projektionsmuster auf die Oberfläche des Materialstapels zu projizieren,
wobei die Höhenbestimmungseinheit dazu eingerichtet ist, dass die Bestimmung der Höhe durch die Projektionslinie oder das Projektionsmuster befördert oder ermöglicht, bevorzugt befördert, wird, und/oder wobei die Endabschnittsidentifikationseinheit dazu eingerichtet ist, dass die Identifikation der Position des Endabschnitts des bahnförmigen Materials durch die Projektionslinie oder das Projektionsmuster befördert oder ermöglicht, bevorzugt befördert, wird,
wobei der oder die Projektoren besonders bevorzugt in einem Winkel im Bereich von 15° bis 60° relativ zum Strahlengang einer elektronischen Bildaufnahmeeinrichtung der Höhenbestimmungseinheit und/oder der Endabschnittsidentifikationseinheit angeordnet ist.

Im Rahmen der Entwicklung der vorliegenden Erfindung ist es den Erfindern zudem gelungen, bevorzugte Ausgestaltungen und Ergänzungen für die erfindungsgemäße Versorgungsvorrichtung vorzusehen. Insbesondere bei der Verarbeitung von zumeist klebrigen Kautschukmaterialien kann es nämlich in einigen Fällen erschwert sein, den Endabschnitt vom unterliegenden bahnförmigen Material abzuheben und zu separieren. Hierfür schlagen die Erfinder vor, in der erfindungsgemäßen Versorgungsvorrichtung zusätzlich eine Fixierungseinheit vorzusehen, die dem Zwecke dient, das unterliegende bahnförmige Material festzuhalten, während der obere Teil angehoben wird. Eine entsprechende Fixierungsleistung kann beispielsweise über eine verfahrbare Fixierungseinheit geleistet werden, welche bei Bedarf über den Materialstapel verschwenkt und auf diesen herabgesenkt wird, um die Operation des Aufnehmens zu befördern. Eine entsprechende Fixierungseinheit kann dabei in vorteilhafter Weise zumindest teilweise auf die erfindungsgemäß ohnehin vorgesehene Bewegungseinheit zurückgreifen, beispielsweise indem die Fixierungseinheit zumindest teilweise im gleichen Linearachsensystem verfahrbar ist wie die Aufnahmeeinheit. In synergistischer Weise kann dabei bei der Positionierung der Fixierungseinheit auf die Informationen zurückgegriffen werden, welche von der Höhenbestimmungseinheit beziehungsweise der Endabschnittsidentifikationseinheit bereitgestellt werden. Bevorzugt ist entsprechend eine erfindungsgemäße Versorgungsvorrichtung, wobei die Versorgungsvorrichtung zusätzlich umfasst:
g) eine oder mehrere verfahrbare und/oder verschwenkbare Fixierungseinheiten, bevorzugt pneumatisch, hydraulisch oder elektrisch verfahrbare und/oder verschwenkbare Fixierungseinheiten, die dazu eingerichtet sind, einen Teil des bahnförmigen Materials im Materialstapel so zu fixieren, dass ein Abheben des Teils des bahnförmigen Materials entlang der Kontaktierungsrichtung verhindert oder erschwert wird, bevorzugt verhindert,
wobei die eine oder die mehreren Fixierungseinheiten bevorzugt in einem linearen Achsensystem verfahrbar sind, wobei die Steuerungseinheit besonders bevorzugt dazu eingerichtet ist, die Fixierungseinheiten in Abhängigkeit von der Höhe des Materialstapels und/oder der Position eines Endabschnitts des bahnförmigen Materials im Materialstapel zu steuern.

Nach Einschätzung der Erfinder lässt sich eine verbesserte Steuerung der erfindungsgemäßen Versorgungsvorrichtung dadurch erreichen, dass diese Mittel zur Identifizierung der eingebrachten Lagereinheiten umfassen, welche auf drahtlose Kommunikation zurückgreifen, um vor dem Einsatz grundlegende Informationen über das Material bzw. den Materialstapel zu erhalten. Hierdurch ist es beispielsweise möglich, eine mit einem NFC- oder RFID-Chip versehene Palette, welche in die Versorgungsvorrichtung eingebracht wird, zu identifizieren und in dem Chip gespeicherte Informationen über das entsprechende Material auszulesen. Entsprechende Informationen können nicht nur Hinweise auf die typische Belegungshöhe der entsprechenden Lagereinheit sondern auch Informationen zum Material oder günstige Aufnahmeparameter zur Steuerung der Aufnahmeeinheit sowie Hinweise über die Breite des auf der Lagereinheit gelagerten Materials umfassen. Bevorzugt ist also eine erfindungsgemäße Versorgungsvorrichtung, wobei die Versorgungsvorrichtung Mittel zur Identifizierung einer in die Versorgungsvorrichtung eingebrachten Lagereinheit und oder eines Materialstapels mittels drahtloser Kommunikation umfasst.

Um die mit dem Prozess betrauten Arbeitskräfte weiter zu entlasten, schlagen die Erfinder vor, dass in einer besonders bevorzugten Ausführungsform die ohnehin aufgenommenen Bildinformationen der Höhenbestimmungseinheit beziehungsweise Endabschnitts in der Identifikationseinheit zusätzlich dazu verwendet werden können, um die Qualität des in die Versorgungsvorrichtung eingebrachten Materials zu bewerten, insbesondere hinsichtlich der Oberflächenbelegung mit Fremdpartikeln, welche den reibungslosen Betrieb der nachgeschalteten Verarbeitungsvorrichtung nachteilig beeinflussen können. Dies kann beispielsweise unter Einsatz von kommerzieller Bildauswertungssoftware erfolgen, die beispielsweise auf die Detektion von farblich abweichenden Partikeln ausgerichtet ist oder auf komplexere Methoden zurückgreifen kann, wie sie beispielsweise über maschinelles Lernen zugänglich sind. Bevorzugt ist folglich eine erfindungsgemäße Versorgungsvorrichtung, wobei die Höhenbestimmungseinheit und/oder die Endabschnittsidentifikationseinheit, bevorzugt eine beide Funktionen erfüllende Funktionseinheit, zusätzlich dazu eingerichtet ist, den Belegungsgrad der Oberfläche des Materialstapels mit Verunreinigungen zu bestimmen, wobei die Versorgungsvorrichtung bevorzugt dazu eingerichtet ist, ein optisches und/oder akustisches Warnsignal auszugeben, wenn der Belegungsgrad einen vordefinierten Schwellenwert überschreitet, wobei die Steuerungseinheit bevorzugt dazu eingerichtet ist, die Überführung des bahnförmigen Materials auf die Fördervorrichtung automatisch zu stoppen, wenn der Belegungsgrad einen vordefinierten Schwellenwert überschreitet.

Im Lichte der vorstehenden Ausführungen, welche bislang auf die erfindungsgemäße Versorgungsvorrichtung gerichtet waren, ist es für den Fachmann verständlich, dass die Erfindung auch ein erweitertes System umfasst, welches neben der erfindungsgemäßen Versorgungsvorrichtung auch eine entsprechende Fördervorrichtung umfasst, insbesondere ein Fließband. Die Erfindung betrifft demnach auch ein Versorgungssystem zur Versorgung eines Extruders, umfassend:
u) eine erfindungsgemäße Versorgungsvorrichtung, und
v) eine Fördervorrichtung, wobei die Fördervorrichtung dazu eingerichtet ist, ein auf der Fördervorrichtung angeordnetes bahnförmiges Material zu einer Materaleingabestelle eines Extruders zu fördern,
wobei das Versorgungssystem dazu eingerichtet ist, dass ein in der Versorgungsvorrichtung angeordnetes bahnförmiges Material durch die Versorgungsvorrichtung auf der Fördervorrichtung angeordnet werden kann.

Für die meisten Fälle relevant ist also ein erfindungsgemäßes Versorgungssystem, wobei die Fördervorrichtung ein Fließband ist. Typisch ist ein erfindungsgemäßes Versorgungssystem, wobei der Materialstapel und die Fördervorrichtung quer zur Kontaktierungsrichtung voneinander beabstandet sind.

Um auch bei klebrigen Materialien eine möglichst präzise Übergabe des aufgenommenen Endabschnitts auf die Versorgungsvorrichtung zu gewährleisten, schlagen die Erfinder vor, dass es sinnvoll ist, ein Anpresselement vorzusehen, welches im Zusammenhang mit dem Auflösen der Verbindung des aufgenommenen Materials das Material an die Fördervorrichtung drückt, damit auch bei klebrigen Materialien und/oder unvollständigen Auflösungen der Verbindung zwischen Aufnahmeeinheit und Material ein zuverlässiges Entfernen der Aufnahmeeinheit vom abgelegten Endabschnitt möglich ist. Bevorzugt ist entsprechend ein erfindungsgemäßes Versorgungssystem, wobei das Versorgungssystem ein oder mehrere Anpresselemente, bevorzugt Anpresswalzen, umfasst, bevorzugt als Teil der Fördervorrichtung, die dazu eingerichtet sind, ein durch die Versorgungsvorrichtung auf der Fördervorrichtung angeordnetes bahnförmiges Material an die Fördervorrichtung anzupressen, um die Auflösung der Verbindung zwischen der Aufnahmeeinheit und dem bahnförmigen Material zu befördern oder zu bewirken.

Darüber hinaus ist es nach Einschätzung der Erfinder vorteilhaft, wenn im erfindungsgemäßen Versorgungssystem auch Mittel zum Durchtrennen des bahnförmigen Materials vorgesehen werden. Hierdurch entfällt die Notwendigkeit separater Trennvorrichtungen, insbesondere manuell betätigter Trennvorrichtungen, und der Materialwechsel wird auch im Fall von lediglich halb geleerten Paletten erleichtert, wodurch eine zusätzliche Entlastung der im Prozess eingesetzten Arbeitskräfte erreicht wird. Bevorzugt ist daher ein erfindungsgemäßes Versorgungssystem, wobei das Versorgungssystem eine oder mehrere Trennvorrichtungen, bevorzugt Schneidmesser, umfasst, bevorzugt als Teil der Fördervorrichtung, die dazu eingerichtet sind, das von der Fördervorrichtung geförderte bahnförmige Material zu zertrennen und dadurch eine Nachförderung aus der Versorgungsvorrichtung zu unterbinden.

Der Fachmann versteht, dass die Erfindung auch ein Verfahren zum Betrieb einer erfindungsgemäßen Versorgungsvorrichtung für den vorgesehenen Zweck umfasst, welches die vorstehend im Detail beschriebenen Schritte definiert. Die Erfindung betrifft nämlich auch ein Verfahren zur Überführung eines bahnförmigen Materials von einem Materialstapel auf eine Fördervorrichtung mit einer erfindungsgemäßen Versorgungsvorrichtung bzw. in einem erfindungsgemäßen Versorgungssystem, umfassend die Verfahrensschritte:
h) Bereitstellen eines Materialstapels umfassend ein bahnförmiges Material und Einbringen des Materialstapels in die Versorgungsvorrichtung,
i) Identifizieren eines Endabschnitts des bahnförmigen Materials im Materialstapel mit der Endabschnittsidentifikationseinheit,
j) Bestimmen der Höhe des Materialstapels im Bereich des identifizierten Endabschnitts,
k) Bewegen der Aufnahmeeinheit mit der Bewegungseinheit zum Herstellen eines Kontaktes der Aufnahmeeinheit mit dem bahnförmigen Material im Bereich des identifizierten Endabschnitts,
l) Herstellen einer reversibel und zerstörungsfrei lösbaren Verbindung zwischen der Aufnahmeeinheit und dem bahnförmigen Material zum Aufnehmen des Endabschnitts, und
m) Bewegen der Aufnahmeeinheit und des aufgenommenen Endabschnitts mit der Bewegungseinheit zum Abheben des aufgenommenen Endabschnitts vom Materialstapel, Anordnen des Endabschnitts auf einer Fördervorrichtung und Auflösen der reversibel und zerstörungsfrei lösbaren Verbindung zwischen der Aufnahmeeinheit und dem bahnförmigen Material.

Bei dem erfindungsgemäßen Verfahren ist es nach Einschätzung der Erfinder besonders bevorzugt, das bahnförmige Material mit der Aufnahmeeinheit vergleichsweise nah an der Kante des Endabschnitts, d.h. möglichst nah am losen Ende aufzugreifen, da hierdurch eine besonders leichte Aufnahme vom unterliegenden Material und insbesondere auch ein möglichst präzises Ablegen auf der Fördereinheit ermöglicht wird. Bevorzugt ist also ein erfindungsgemäßes Verfahren, wobei die Verbindung zwischen der Aufnahmeeinheit und dem bahnförmigen Material in einem Bereich des identifizierten Endabschnitts erfolgt, der sich von der Kante des Endabschnitts in Bahnrichtung um 0,3*B oder weniger, bevorzugt 0,2*B oder weniger, besonders bevorzugt 0,1*B oder weniger, ganz besonders bevorzugt 0,05*B oder weniger, erstreckt, wobei B die mittlere Breite des Materialstapels entlang der Bahnrichtung ist.

Hinsichtlich der weiteren Ausgestaltung ergeben sich die bevorzugten Verfahrensführungen unmittelbar aus den vorstehenden Ausführungen zur erfindungsgemäßen Versorgungsvorrichtung, beziehungsweise dem erfindungsgemäßen Versorgungssystem.

Bevorzugt ist entsprechend insbesondere ein erfindungsgemäßes Verfahren, wobei das bahnförmige Material ein Kautschukmaterial umfasst, wobei das bahnförmige Material bevorzugt aus dem Kautschukmaterial besteht.

Bevorzugt ist mit Blick auf eine hohe Prozesssicherheit ebenfalls ein erfindungsgemäßes Verfahren, wobei die Orientierung des Materialstapels in der Versorgungsvorrichtung mit der Höhenbestimmungseinheit und/oder Endabschnittsidentifikationseinheit kontrolliert wird, wobei der Materialstapel in der Versorgungsvorrichtung bevorzugt in Abhängigkeit von der bestimmten Orientierung ausgerichtet wird.

Typisch ist prinzipiell ein erfindungsgemäßes Verfahren, wobei das bahnförmige Material eine Länge im Bereich von 1 bis 200 m, bevorzugt im Bereich von 5 bis 150 m, besonders bevorzugt im Bereich von 10 bis 100 m, aufweist. Bevorzugt ist auch ein erfindungsgemäßes Verfahren, wobei der Materialstapel eine Höhe im Bereich von 0,05 bis 2,0 m, bevorzugt im Bereich von 0,1 bis 1,6 m, besonders bevorzugt im Bereich von 0,2 bis 1,2 m, aufweist.

Typisch ist dabei ein erfindungsgemäßes Verfahren, wobei der Materialstapel durch eine lagenförmige Anordnung von Teilabschnitten des Materials gebildet wird.

Bevorzugt ist insoweit ein erfindungsgemäßes Verfahren, wobei der Materialstapel auf einer Lagereinheit, bevorzugt einer Palette, bereitgestellt wird, bevorzugt auf einer Palette, wobei die Lagereinheit bevorzugt zwei oder mehr Materialstapel umfasst, wobei das Verfahren bevorzugt zeitgleich lediglich für einen Materialstapel durchgeführt wird.

Bevorzugt ist auch ein erfindungsgemäßes Verfahren, wobei das Bereitstellen in Verfahrensschritt a) das Verfahren eines Materialstapels, bevorzugt eines auf einer Lagereinheit angeordneten Materialstapels, aus einem Lagerbereich zu der Versorgungsvorrichtung umfasst, wobei das Verfahren bevorzugt mit einem Flurförderfahrzeug, bevorzugt einem autonom fahrenden Flurförderfahrzeug erfolgt.

Bevorzugt ist außerdem ein erfindungsgemäßes Verfahren, wobei das Bereitstellen in Verfahrensschritt k) durch die Steuerungseinheit gesteuert wird, bevorzugt in Abhängigkeit von der Höhe des Materialstapels und/oder der Position eines Endabschnitts des bahnförmigen Materials im Materialstapel.

Bevorzugt ist zudem ein erfindungsgemäßes Verfahren, wobei das Verfahren automatisiert durchgeführt wird.

Bevorzugt ist auch ein erfindungsgemäßes Verfahren, wobei das bahnförmige Material beim Anordnen des Endabschnitts auf der Fördervorrichtung und/oder beim Auflösen der reversibel und zerstörungsfrei lösbaren Verbindung zwischen der Aufnahmeeinheit und dem bahnförmigen Material durch ein oder mehrere Anpresselemente, bevorzugt Anpresswalzen, an die Fördervorrichtung angepresst werden, um die Auflösung der Verbindung zwischen der Aufnahmeeinheit und dem bahnförmigen Material zu befördern oder zu bewirken.

Bevorzugt ist ein erfindungsgemäßes Verfahren, wobei das bahnförmige Material beim Anordnen des Endabschnitts auf der Fördervorrichtung mit einem zuvor auf der Fördervorrichtung beförderten anderen bahnförmigen Material auf Stoß angeordnet wird.

Bevorzugt ist überdies ein erfindungsgemäßes Verfahren, wobei ein im unterliegenden Teil des Materialstapels liegender Teil des bahnförmigen Materials beim Abheben des aufgenommenen Endabschnitts vom Materialstapel mit einer oder mehreren verfahrbaren und/oder verschwenkbaren Fixierungseinheiten so fixiert wird, dass das Abheben des aufgenommenen Endabschnitts vom Materialstapel befördert wird.

Bevorzugt ist zusätzlich ein erfindungsgemäßes Verfahren, zusätzlich umfassend den Verfahrensschritt:
n) Unterbinden der Nachförderung des bahnförmigen Materials aus der Versorgungsvorrichtung durch Zertrennen des geförderten bahnförmigen Materials mit einer oder mehreren Trennvorrichtungen, bevorzugt Schneidmessern,
wobei das bahnförmige Material beim Zertrennen zumindest teilweise durch die Aufnahmeeinrichtung fixiert wird, wobei die Versorgungsvorrichtung dazu verwendet wird, die durch das Zertrennen erzeugte Kante des bahnförmige Materials auf dem Materialstapel zu platzieren.

Im Lichte der besonderen Eignung der erfindungsgemäßen Versorgungsvorrichtung beziehungsweise des erfindungsgemäßen Versorgungssystems für die Verarbeitung von Kautschukmaterialien, welche regelmäßig einem Extruder zugeführt werden sollen, versteht der Fachmann, dass die Erfindung auch ein Extrudersystem sowie ein Verfahren zur Beschickung eines Extruders betrifft. Die Erfindung betrifft entsprechend auch ein Extrudersystem, umfassend:
x) ein oder mehrere erfindungsgemäße Versorgungssysteme, und
y) zumindest einen Extruder,
wobei das eine oder die mehreren Versorgungssysteme dazu eingerichtet sind, ein in der Versorgungsvorrichtung angeordnetes bahnförmiges Material mittels der Versorgungsvorrichtung und der Fördervorrichtung zu einer Materialeingabestelle des Extruders zu fördern.

Bevorzugt ist dabei ein erfindungsgemäßes Extrudersystem, wobei das Extrudersystem für jeden Extruder zwei oder mehr, bevorzugt drei oder mehr, besonders bevorzugt vier oder mehr, ganz besonders bevorzugt fünf oder mehr, Versorgungssysteme umfasst.

Die Erfindung betrifft ebenfalls ein Verfahren zum Versorgen eines Extruders mit einem bahnförmigen Material, umfassend die Verfahrensschritte des erfindungsgemäßen Verfahrens zur Überführung eines bahnförmigen Materials von einem Materialstapel auf eine Fördervorrichtung, sowie den Verfahrensschritt:
p) Fördern des auf der Fördervorrichtung angeordneten bahnförmigen Materials zu einer Materialeingabestelle des Extruders.

Offenbart wird überdies die Verwendung einer erfindungsgemäßen Versorgungsvorrichtung oder eines erfindungsgemäßen Versorgungssystems zur Reduktion des manuellen Arbeitsaufwandes und zur Senkung des Verletzungsrisikos beim Betrieb eines Extrusionssystems.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Darstellung eines erfindungsgemäßen Versorgungssystems in einer bevorzugten Ausführungsform in einer ersten Ansicht;
- Fig. 2: eine schematische Darstellung des erfindungsgemäßen Versorgungssystems der Fig. 1 in einer zweiten Ansicht;
- Fig. 3: eine schematische Darstellung einer erfindungsgemäßen Versorgungsvorrichtung in einer bevorzugten Ausführungsform;
- Fig. 4: eine schematische Visualisierung einer möglichen Höhenbestimmungseinheit für den Einsatz in einer erfindungsgemäßen Versorgungsvorrichtung;
- Fig. 5: eine schematische Visualisierung einer möglichen Höhenbestimmungseinheit und Endabschnittsidentifikationseinheit für den Einsatz in einer erfindungsgemäßen Versorgungsvorrichtung; und
- Fig. 6: eine schematische Visualisierung einer möglichen Höhenbestimmungseinheit und Endabschnittsidentifikationseinheit für den Einsatz in einer erfindungsgemäßen Versorgungsvorrichtung.

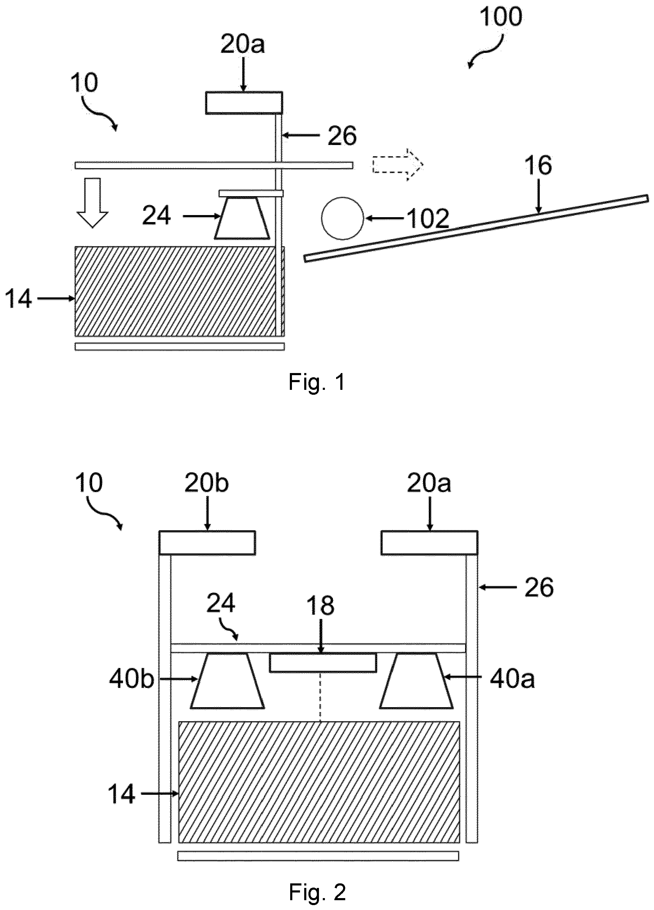

Die Fig. 1 und 2 zeigen schematische Darstellungen eines erfindungsgemäßen Versorgungssystems 100 zur Versorgung eines Extruders in unterschiedlichen Ansichten, nämlich der Seiten- und der Rückansicht. Das Versorgungssystem 100 umfasst eine als Fließband ausgebildete Fördervorrichtung 16 und eine erfindungsgemäße Versorgungsvorrichtung 10 zur Überführung eines bahnförmigen Materials 12 von einem Materialstapel 14 auf die Fördervorrichtung 16.

Das bahnförmige Material 12 besteht im gezeigten Beispiel aus einem Kautschukmaterial, wobei der Materialstapel 14 durch eine lagenförmige Anordnung des bahnförmigen Materials 12 im Zickzack-Muster gebildet wird. Der Materialstapel 14 ist auf einer Lagereinheit angeordnet, welche im gezeigten Beispiel als Palette ausgeführt ist.

Die erfindungsgemäße Versorgungsvorrichtung 10 des erfindungsgemäßen Versorgungssystems 100 weist zur Höhenbestimmung des bahnförmigen Materials 12 eine Höhenbestimmungseinheit 18 auf, welche im gezeigten Beispiel einen laserbasierten Entfernungsmesser umfasst, um die Höhe des Materialstapels 14 aus der Entfernung zwischen der Höhenbestimmungseinheit 18 und der Oberfläche des Materialstapels 14 zu bestimmen. Zusätzlich weist die gezeigte Versorgungsvorrichtung 10 zwei Endabschnittsidentifikationseinheiten 20a, 20b zur Identifikation der Position eines Endabschnitts 22a, 22b des bahnförmigen Materials 12 im Materialstapel 14 auf, die als kamerabasierte Systeme ausgeführt sind.

Darüber hinaus weist die Versorgungsvorrichtung 10 eine Aufnahmeeinheit 24 mit zwei voneinander beabstandeten Aufnahmeelementen 40a, 40b auf. Diese Aufnahmeelemente 40a-b umfassen jeweils einen steuerbaren Sauggreifer nebst damit verbundenen Vakuumpumpen und dienen der Herstellung einer reversibel und zerstörungsfrei lösbaren Verbindung mit dem bahnförmigen Material 12.

Die Versorgungsvorrichtung 10 umfasst zum Verfahren der Aufnahmeeinheit 24 eine Bewegungseinheit 26, welche im gezeigten Beispiel ein Linearachsensystem mit zwei linearen Achsen ist. Die Höhenbestimmungseinheit 18 sowie die Aufnahmeeinheit 24 sind dabei so an der Bewegungseinheit 26 angeordnet, dass diese gemeinsam in Kontaktierungsrichtung, das heißt in Fig. 1 entlang des durchgehenden Pfeils, sowie quer zur Kontaktierungsrichtung, das heißt in Fig. 1 entlang des gestrichelten Pfeils, bewegt werden können. Dies ermöglicht beispielsweise die Platzierung des durch die Aufnahmeelemente 40a-b angehobenen bahnförmigen Materials 12 auf der quer zur Kontaktierungsrichtung beabstandeten Fördervorrichtung 16. Die Endabschnittsidentifikationseinheiten 20a-b sind unabhängig von den Bewegungen der Aufnahmeeinheit 24 sowie der Höhenbestimmungseinheit 18 an der Bewegungseinheit 26 angeordnet.

Zur Steuerung der Versorgungsvorrichtung 10 umfasst diese eine Steuerungseinheit (nicht gezeigt), welche unter anderem die Bewegung der weiteren Komponenten sowie deren Aktivierung steuert. Darüber hinaus kann die Steuereinheit beispielswiese den Abstand der Aufnahmeelemente 40a-b zueinander verändern und die Orientierung des Materialstapels 14 in der Versorgungsvorrichtung 10 mit der Höhenbestimmungseinheit 18 bzw. der Endabschnittsidentifikationseinheiten 20a-b kontrollieren.

In einem automatisierten erfindungsgemäßen Verfahren mit einem nach Fig. 1 und 2 ausgeführten erfindungsgemäßen Versorgungssystem 100 kann mittels der Endabschnittsidentifikationseinheiten 20a-b der Endabschnitt 22a-b des bahnförmigen Materials 12 im Materialstapel 14 identifiziert und mittels der Höhenbestimmungseinheit 18 dessen Höhe bestimmt werden, sodass die Aufnahmeeinheit 24 das bahnförmige Material 12 im Bereich des Endabschnitts 22a-b anheben und auf der Fördervorrichtung 16 so anordnen kann, dass es mit einem zuvor auf der Fördervorrichtung 16 beförderten anderen bahnförmigen Material auf Stoß angeordnet wird.

Die Fördervorrichtung 16 umfasst hierfür zusätzlich ein Anpresselement 102, welches im gezeigten Beispiel als Anpresswalze ausgebildet ist. Das Anpresselement 102 unterstütz das Lösen der Verbindung zwischen der Aufnahmeeinheit 24 bzw. dessen Aufnahmeelement 40a-b und dem bahnförmigen Material 12 nach Anordnung des bahnförmigen Materials 12 auf der Fördervorrichtung 16. Zudem weist die Fördervorrichtung 16 eine Trennvorrichtung auf (nicht gezeigt), welche das von der Fördervorrichtung 16 geförderte bahnförmige Material 12 abtrennen kann, um eine Nachförderung aus der Versorgungsvorrichtung 10 zu unterbinden.

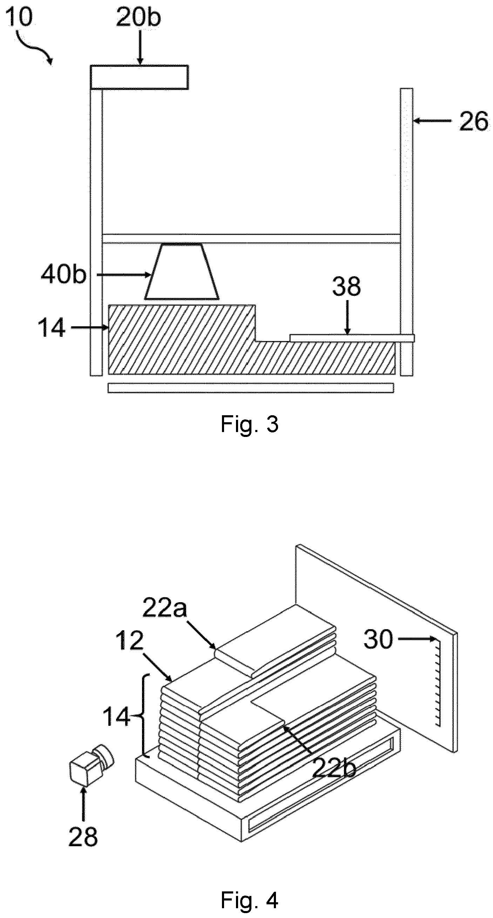

Fig. 3 zeigt die erfindungsgemäße Versorgungsvorrichtung 10 in einer weiteren bevorzugten Ausführungsform, in welcher die Versorgungsvorrichtung 10 zusätzlich eine mittels der Bewegungseinheit 26 verfahrbare und verschwenkbare Fixierungseinheit 38 umfasst, um einen Teil des bahnförmigen Materials 12 im Materialstapel 14 so zu fixieren, dass ein Anheben dieses Teils des bahnförmigen Materials 12 entlang der Kontaktierungsrichtung verhindert wird.

Fig. 4 zeigt eine mögliche Ausgestaltung der Höhenbestimmungseinheit 18, welche im gezeigten Beispiel eine Kamera als elektronische Bildaufnahmeeinrichtung 28 umfasst, die so angeordnet ist, dass der zentrale Strahlengang im Wesentlichen orthogonal auf die Seitenwand des Materialstapels 14 trifft. Die Höhenbestimmungseinheit 18 kann anhand des Abgleichs mit einer auf einem hinterliegenden Schirm angebrachten Skala 30 sowie den von der elektronischen Bildaufnahmeeinrichtung 28 aufgenommenen Bildern die Höhe des Materialstapels 14 bestimmen, so dass die erfindungsgemäße Versorgungsvorrichtung 10 im Lichte dieser Informationen gesteuert werden kann.

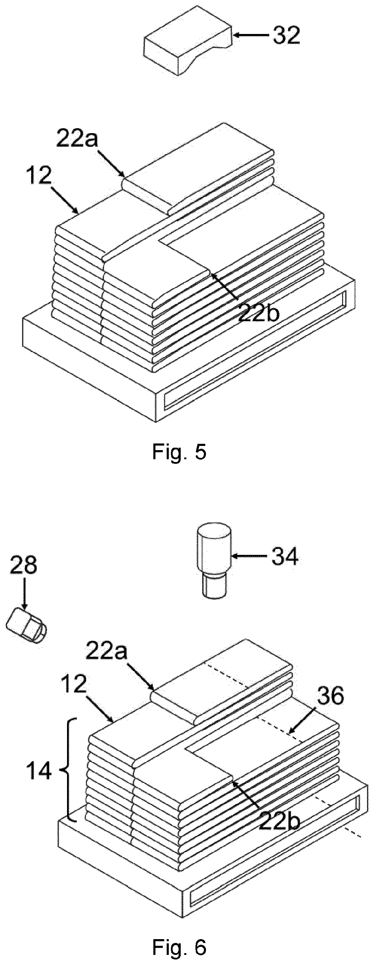

Fig. 5 zeigt eine weitere mögliche Ausgestaltung der Höhenbestimmungseinheit 18, in welcher diese mit der Endabschnittsidentifikationseinheit 20a-b in einer gemeinsamen Funktionseinheit 32 zu einem leistungsfähigen Sensor kombiniert ist. Die Funktionseinheit 32 umfasst hierfür beispielsweise eine elektronische Bildaufnahmeeinrichtung 28 sowie zwei oder mehr voneinander beabstandete Lichtquellen. Über photometrisches Stereo kann die Funktionseinheit 32 sowohl die Höhe des Materialstapels 14 als auch die Position des Endabschnitts 22a-b des bahnförmigen Materials 12 im Materialstapel 14 identifizieren und diese Informationen an die Steuerungseinheit weitergeben.

Zusätzlich kann die Funktionseinheit 32 im gezeigten Beispiel den Belegungsgrad der Oberfläche des Materialstapels 14 mit Verunreinigungen bestimmen, sodass die Versorgungsvorrichtung 10 ein optisches oder akustisches Warnsignal ausgeben kann, wenn der Belegungsgrad einen vordefinierten Schwellenwert überschreitet und die Überführung des bahnförmigen Materials 12 auf die Fördervorrichtung 16 automatisch gestoppt wird.

Fig. 6 zeigt eine weitere Ausführungsform der Höhenbestimmungseinheit 18 sowie der Endabschnittsidentifikationseinheit 20a-b, wobei in diesem Fall beide Funktionen durch einen Laserprojektor 34 und eine elektronische Bildaufnahmeeinrichtung 28 geleistet werden. Der Laserprojektor 34 projiziert mittels sichtbarer elektromagnetischer Strahlung eine Projektionslinie 36 auf die Oberfläche des Materialstapels 14. Der Verlauf der Projektionslinie 36 auf dem Materialstapel 14 auf den Bildern der elektronischen Bildaufnahmeeinrichtung 28 erleichtert die Bestimmung der Höhe des Materialstapels 14 sowie der Position des Endabschnitts 22a-b des bahnförmigen Materials 12 im Materialstapels 14.

### Bezugszeichenliste

- 10: Versorgungsvorrichtung
- 12: bahnförmiges Material
- 14: Materialstapel
- 16: Fördervorrichtung
- 18: Höhenbestimmungseinheit
- 20a-b: Endabschnittsidentifikationseinheit
- 22a-b: Endabschnitt
- 24: Aufnahmeeinheit
- 26: Bewegungseinheit
- 28: Bildaufnahmeeinrichtung
- 30: Skala
- 32: Funktionseinheit
- 34: Projektor
- 36: Projektionslinie
- 38: Fixierungseinheit
- 40a-b: Aufnahmeelement
- 100: Versorgungssystem
- 102: Anpresselement

## Patentansprüche

1. Versorgungsvorrichtung (10) zur Überführung eines bahnförmigen Materials (12) von einem Materialstapel (14) auf eine Fördervorrichtung (16), umfassend:
a) eine Höhenbestimmungseinheit (18), wobei die Höhenbestimmungseinheit (18) dazu eingerichtet ist, die Höhe des Materialstapels (14) zu bestimmen,
b) eine Endabschnittsidentifikationseinheit (20a, 20b), wobei die Endabschnittsidentifikationseinheit (20a-b) dazu eingerichtet ist, im Materialstapel (14) die Position eines Endabschnitts (22a, 22b) des bahnförmigen Materials (12) zu identifizieren,
c) eine Aufnahmeeinheit (24), wobei die Aufnahmeeinheit (24) dazu eingerichtet ist, dass bei Kontakt mit dem bahnförmigen Material (12) eine reversibel und zerstörungsfrei lösbare Verbindung mit dem bahnförmigen Material (12) hergestellt werden kann,
d) eine Bewegungseinheit (26), wobei die Bewegungseinheit (26) dazu eingerichtet ist, die Aufnahmeeinheit (24) zum Herstellen eines Kontaktes mit dem bahnförmigen Material (12) entlang einer Kontaktierungsrichtung zu bewegen und dazu eingerichtet ist, die Aufnahmeeinheit (24) in zumindest eine Richtung quer zur Kontaktierungsrichtung zu bewegen, und
e) eine Steuerungseinheit zur Steuerung der Versorgungsvorrichtung (10).

2. Versorgungsvorrichtung (10) nach Anspruch 1, wobei die Höhenbestimmungseinheit (18) einen Entfernungsmesser umfasst, wobei die Höhenbestimmungseinheit (18) dazu eingerichtet ist, die Höhe des Materialstapels (14) aus der Entfernung zwischen der Höhenbestimmungseinheit (18) und der Oberfläche des Materialstapels (14) zu bestimmen.

3. Versorgungsvorrichtung (10) nach einem der Ansprüche 1 oder 2, wobei die Höhenbestimmungseinheit (18) eine elektronische Bildaufnahmeeinrichtung (28) umfasst, wobei die Höhenbestimmungseinheit (18) dazu eingerichtet ist, unter Berücksichtigung einer aufgenommenen Referenz und/oder Skala (30) aus den von der elektronischen Bildaufnahmeeinrichtung (28) aufgenommenen Bildern die Höhe des Materialstapels (14) zu bestimmen.

4. Versorgungsvorrichtung (10) nach einem der Ansprüche 1 bis 3, wobei die Höhenbestimmungseinheit (18) eine elektronische Bildaufnahmeeinrichtung (28) und zwei oder mehr voneinander beabstandet angeordnete Lichtquellen umfasst, wobei die Höhenbestimmungseinheit (18) dazu eingerichtet ist, durch photometrisches Stereo aus den von der elektronischen Bildaufnahmeeinrichtung (28) aufgenommenen Bildern die Höhe des Materialstapels (14) zu bestimmen.

5. Versorgungsvorrichtung (10) nach einem der Ansprüche 1 bis 4, wobei die Endabschnittsidentifikationseinheit (20a-b) eine elektronische Bildaufnahmeeinrichtung (28) umfasst, wobei die Endabschnittsidentifikationseinheit (20a-b) dazu eingerichtet ist, aus den von der elektronischen Bildaufnahmeeinrichtung (28) aufgenommenen Bildern im Materialstapel (14) die Position eines Endabschnitts (22a-b) des bahnförmigen Materials (12) zu identifizieren.

6. Versorgungsvorrichtung (10) nach einem der Ansprüche 1 bis 5, wobei die Versorgungsvorrichtung (10) zusätzlich umfasst:
f) einen oder mehrere Projektoren (34) die dazu eingerichtet sind, mittels elektromagnetischer Strahlung eine Projektionslinie (36) oder ein Projektionsmuster auf die Oberfläche des Materialstapels (14) zu projizieren,
wobei die Höhenbestimmungseinheit (18) dazu eingerichtet ist, dass die Bestimmung der Höhe durch die Projektionslinie (36) oder das Projektionsmuster befördert oder ermöglicht wird, und/oder wobei die Endabschnittsidentifikationseinheit (20a-b) dazu eingerichtet ist, dass die Identifikation der Position des Endabschnitts (22a-b) des bahnförmigen Materials (12) durch die Projektionslinie (36) oder das Projektionsmuster befördert oder ermöglicht wird.

7. Versorgungsvorrichtung (10) nach einem der Ansprüche 1 bis 6, wobei die Versorgungsvorrichtung (10) zusätzlich umfasst:
g) eine oder mehrere verfahrbare und/oder verschwenkbare Fixierungseinheiten (38), die dazu eingerichtet sind, einen Teil des bahnförmigen Materials (12) im Materialstapel (14) so zu fixieren, dass ein Abheben des Teils des bahnförmigen Materials (12) entlang der Kontaktierungsrichtung verhindert oder erschwert wird.

8. Versorgungsvorrichtung (10) nach einem der Ansprüche 1 bis 7, wobei die Aufnahmeeinheit (24) einen oder mehrere steuerbare Sauggreifer als Aufnahmeelemente (40a, 40b) umfasst.

9. Versorgungsvorrichtung (10) nach einem der Ansprüche 1 bis 8, wobei die Bewegungseinheit (26) ein Linearachsensystem umfassend zumindest zwei lineare Achsen oder ein Roboterarm ist.

10. Versorgungssystem (100) zur Versorgung eines Extruders, umfassend:
u) eine Versorgungsvorrichtung (10) nach einem der Ansprüche 1 bis 9, und
v) eine Fördervorrichtung (16), wobei die Fördervorrichtung (16) dazu eingerichtet ist, ein auf der Fördervorrichtung (16) angeordnetes bahnförmiges Material (12) zu einer Materaleingabestelle eines Extruders zu fördern,
wobei das Versorgungssystem (100) dazu eingerichtet ist, dass ein in der Versorgungsvorrichtung (10) angeordnetes bahnförmiges Material (12) durch die Versorgungsvorrichtung (10) auf der Fördervorrichtung (16) angeordnet werden kann.

11. Versorgungssystem (100) nach Anspruch 10, wobei das Versorgungssystem (100) eine oder mehrere Anpresselemente (102) umfasst, die dazu eingerichtet sind, ein durch die Versorgungsvorrichtung (10) auf der Fördervorrichtung (16) angeordnetes bahnförmiges Material (12) an die Fördervorrichtung (16) anzupressen, um die Auflösung der Verbindung zwischen der Aufnahmeeinheit (24) und dem bahnförmigen Material (12) zu befördern oder zu bewirken.

12. Versorgungssystem (100) nach einem der Ansprüche 10 oder 11, wobei das Versorgungssystem (100) eine oder mehrere Trennvorrichtungen umfasst, die dazu eingerichtet sind, das von der Fördervorrichtung (16) geförderte bahnförmige Material (12) zu zertrennen und dadurch eine Nachförderung aus der Versorgungsvorrichtung (10) zu unterbinden.

13. Extrudersystem, umfassend:
x) ein oder mehrere Versorgungssysteme (100) nach einem der Ansprüche 10 bis 12, und
y) zumindest einen Extruder,
wobei das eine oder die mehreren Versorgungssysteme (100) dazu eingerichtet sind, ein in der Versorgungsvorrichtung (10) angeordnetes bahnförmiges Material (12) mittels der Versorgungsvorrichtung (10) und der Fördervorrichtung (16) zu einer Materialeingabestelle des Extruders zu fördern.

14. Verfahren zur Überführung eines bahnförmigen Materials (12) von einem Materialstapel (14) auf eine Fördervorrichtung (16) in einem Versorgungssystem (100) nach einem der Ansprüche 10 bis 12, umfassend die Verfahrensschritte:
h) Bereitstellen eines Materialstapels (14) umfassend ein bahnförmiges Material (12) und Einbringen des Materialstapels (14) in die Versorgungsvorrichtung (10),
i) Identifizieren eines Endabschnitts (22a-b) des bahnförmigen Materials (12) im Materialstapel (14) mit der Endabschnittsidentifikationseinheit (20a-b),
j) Bestimmen der Höhe des Materialstapels (14) im Bereich des identifizierten Endabschnitts (22a-b),
k) Bewegen der Aufnahmeeinheit (24) mit der Bewegungseinheit (26) zum Herstellen eines Kontaktes der Aufnahmeeinheit (24) mit dem bahnförmigen Material (12) im Bereich des identifizierten Endabschnitts (22a-b),
I) Herstellen einer reversibel und zerstörungsfrei lösbaren Verbindung zwischen der Aufnahmeeinheit (24) und dem bahnförmigen Material (12) zum Aufnehmen des Endabschnitts (22a-b), und
m) Bewegen der Aufnahmeeinheit (24) und des aufgenommenen Endabschnitts (22a-b) mit der Bewegungseinheit (26) zum Abheben des aufgenommenen Endabschnitts (22a-b) vom Materialstapel (14), Anordnen des Endabschnitts (22a-b) auf einer Fördervorrichtung (16) und Auflösen der reversibel und zerstörungsfrei lösbaren Verbindung zwischen der Aufnahmeeinheit (24) und dem bahnförmigen Material (12).

15. Verfahren zum Versorgen eines Extruders mit einem bahnförmigen Material (12), umfassend die Verfahrensschritte des Verfahrens zur Überführung eines bahnförmigen Materials (12) von einem Materialstapel (14) auf eine Fördervorrichtung (16) nach Anspruch 14, sowie den Verfahrensschritt:
p) Fördern des auf der Fördervorrichtung (16) angeordneten bahnförmigen Materials (12) zu einer Materialeingabestelle des Extruders.
